Europäisches Patentamt

European Patent Office

Office européen des brevets

(11) Numéro de publication: **0 033 041**

**A1**

## (12) DEMANDE DE BREVET EUROPEEN

(21) Numéro de dépôt: **80400119.6**

(22) Date de dépôt: **25.01.80**

(51) Int. Cl.³: **G 11 B 5/84**
G 11 B 5/70, G 06 K 19/08

(43) Date de publication de la demande:
**05.08.81 Bulletin 81/31**

(84) Etats contractants désignés:
**AT BE CH DE FR GB IT LU NL SE**

(71) Demandeur: **RHONE-POULENC SYSTEMES**
**47, rue de l'Echat**
**F-94000 Creteil(FR)**

(72) Inventeur: **Perronet, Roland**
**6 Place Jean Giraudoux**
**F-94000 Creteil(FR)**

(74) Mandataire: **Vesin, Jacques**
**RHONE-POULENC SYSTEMES Service Brevets Tour**
**Générale Quartier Villon**
**Cedex 22 F-92088 Paris la Défense(FR)**

(54) **Support d'enregistrement magnétique sécuritaire et procédé pour sa réalisation.**

(57) L'invention concerne un support d'enregistrement magnétique sécuritaire en forme de bande.

Il comporte un support (I bis) revêtu d'une couche magnétique continue (2) et de surépaisseurs (3) solidaires du support (2), les milieux magnétiques étant constitués de particules magnétisables ayant un champ coercitif sensiblement identique, les surépaisseurs ayant une épaisseur supérieure à 40% de l'épaisseur moyenne de la couche magnétique continue. Le support (I) est élaboré de préférence, par des procédés de transfert à chaud et sous pression.

Application du support de l'invention à l'authentification ou la discrimination d'un objet comportant ledit support magnétique par voie électromagnétique.

Fig. 1

COUPE: AA

# SUPPORT D'ENREGISTREMENT MAGNETIQUE SECURITAIRE

L'invention concerne un support d'enregistrement magnétique sécuritaire, des procédés pour sa préparation et un procédé d'utilisation dudit support.

Il est connu d'utiliser des supports d'enregistrement magnétiques sur lesquels sont codées un certain nombre d'informations. Celles-ci peuvent être lues par des moyens appropriés et permettent de reconnaître les objets en fonction de leur code. C'est ainsi qu'il est courant d'utiliser des supports magnétiques contenant des informations codées en tant que moyen de discrimination de cartes de crédit, de tickets de paiement, de cartes d'accès à certaines zones géographiques ou pendant une période de temps donnée, de papier fiduciaire, etc...

Habituellement, le support d'enregistrement magnétique est constitué d'un support en papier ou matière plastique revêtu localement d'une piste magnétique contenant un mélange de résines dans lesquelles sont dispersés des grains de particules magnétiques, par exemple des particules aciculaires de $Fe_2O_3$ gamma ou toutes autres particules magnétisables.

Ces supports d'enregistrement magnétiques sont généralement réalisés en deux étapes : la première étape consiste à réaliser une bande magnétique de largeur déterminée comportant un support qui est généralement un film de polyester sur lequel on enduit par héliogravure ou tout autre moyen analogue, une piste magnétique bien connue de l'homme de l'art et qui est généralement constituée par une suspension de particules magnétiques dans une solution de résines.

Après évaporation du solvant, la bande magnétique, éventuellement calandrée, est découpée en bandes de largeur voulue, appelées bandes "transfert". La deuxième étape du procédé consiste alors à transférer cette bande de largeur voulue sur le support définitif. Ce transfert peut s'effectuer à froid en présence de solvant comme décrit dans le brevet français n° 2 406 654. Ce transfert peut également s'opérer d'une façon bien connue à chaud et sous pression, la bande transfert étant revêtue d'un adhésif, tel que décrit dans les brevets US 2 628 929, 2 909 442 ou dans les brevets français n° I 250 7I2 et I 4I8 6II.

Le support d'enregistrement magnétique obtenu selon l'une des techniques décrites ci-dessus est alors codé magnétiquement, c'est-à-dire que l'on enregistre à saturation sur la piste magnétique une suite d'informations magnétiques à l'aide d'un générateur d'impulsions directionnelles.

Lors de son utilisation, une tête de lecture lit les informations présentes sur la piste magnétique et les envoit à un comparateur qui les compare aux informations contenues dans un registre afin de déterminer si l'objet est ou non conforme.

De tels supports d'enregistrement ont donné lieu à de nombreuses falsifications telles que reproduction des informations sur un support magnétique vierge ou au contraire, effacement des informations enregistrées afin de réutiliser ledit support.

Pour tenter d'éviter ces falsifications, il a été imaginé des supports magnétiques dit sécuritaires, codés selon différents procédés.

Il est connu, par exemple, du brevet anglais n° I 2I2 502, de réaliser des cartes sécuritaires comportant une première couche continue d'un matériau magnétique ayant un champ coercitif faible et une seconde couche discontinue de matériau magnétique ayant un champ coercitif élevé. Cette seconde couche peut être réalisée sous forme de zones ou points discrets, les deux couches étant superposées, l'une ou l'autre desdites couches pouvant constituer la couche extérieure. Un signal d'authentification de la carte est alors enregistré magnétiquement pour produire des champs magnétiques correspondants dans les deux couches. La carte est ensuite soumise à un champ magnétique d'effacement d'une intensité telle que le signal présent dans la couche à champ coercitif élevé, n'est pas effacé. La carte possède alors son code d'authenticité qui peut être vérifié au cours de chaque utilisation.

L'invention décrite dans ce brevet repose sur l'existence de deux couches magnétiques ayant des champs coercitifs différents, de manière à détecter une information présente uniquement dans la couche discontinue à champ coercitif élevé.

Un tel procédé ainsi que le matériau de mise en oeuvre présente de nombreux inconvénients :

Le fait d'utiliser des particules magnétiques de champs coercitifs différents nécessite tout d'abord l'utilisation de deux types d'enduits magnétiques différents, ce qui complique la fabrication et augmente les coûts de production.

D'autre part, le champ d'effacement utilisé doit avoir une intensité telle qu'il efface le signal présent dans l'une des deux couches sans altérer celui présent dans l'autre couche. Cet ajustement précis est difficile à obtenir.

De plus, il est connu que le champ coercitif des particules magnétiques ne dépend que de la nature de celles-ci. Par conséquent, le changement de particules magnétiques dans l'une ou l'autre couche, ce qui arrive fréquemment dans les fabrications du fait de la variété des approvitionnements, nécessitera un réajustement de l'intensité du champ d'effacement, ce qui est un grave inconvénient pour l'utilisation de telles cartes.

La présente invention permet d'éviter ces inconvénients. Selon l'invention, il est prévu un support d'enregistrement magnétique sécuritaire comprenant un support revêtu d'une première couche magnétique continue d'épaisseur sensiblement constante et d'une seconde couche magnétique discontinue formant localement des surépaisseurs, ou vice-versa, caractérisé en ce que les deux couches magnétiques possèdent un champ coercitif moyen sensiblement égal, tandis que la ou les épaisseurs des surépaisseurs est supérieure ou égale à 40 % de l'épaisseur moyenne de la première couche magnétique.

On obtient ainsi, par l'utilisation de surépaisseurs locales, un support d'enregistrement magnétique tel qu'après enregistrement d'un signal, le signal de lecture correspondant est modulé en amplitude, de sorte que chaque support sécuritaire selon l'invention possède son propre code dépendant uniquement de la répartition desdites surépaisseurs.

Pour que cette modulation soit détectée sans erreur possible par rapport à la modulation d'amplitude du signal qui résulte des faibles variations d'épaisseur de la couche continue, il est également nécessaire que l'épaisseur de la seconde couche soit supérieure ou égale à 40 % de l'épaisseur de la première couche continue. Les variations d'épaisseur de la première ne sont pas supérieures, en effet, à IO % de l'épaisseur moyenne de ladite couche.

Selon un mode préférentiel de réalisation, les cartes sécuritaires selon l'invention sont caractérisées en ce que les particules magnétiques des premières et seconde couches sont identiques.

L'utilisation de deux couches magnétiques ayant sensiblement le même champ coercitif moyen présente de nombreux avantages :

Les cartes sécuritaires selon l'invention sont très souvent réalisées par l'utilisateur final desdites cartes.

Celui-ci possède une machine de transfert des couches magnétiques d'un support temporaire sur la carte sécuritaire. Lorsque les champs coercitifs sont sensiblement égaux, il n'existe alors qu'un seul type de "bande transfert" et il n'y a aucun risque d'erreur dans la réalisation des cartes.

Par contre, avec des couches ayant des champs coercitifs très différents, il existe deux types de "bandes transfert" et l'interversion de ces bandes rend alors lesdites cartes inutilisables dans les appareils conçus pour coder et lire ces cartes avec un ordre déterminé pour les deux couches.

De plus, l'utilisation d'un seul type de "bande transfert" rend la fabrication et le stockage plus simples, ce qui réduit les coûts corrélativement.

Les surépaisseurs utilisées dans le cadre de la présente invention peuvent avoir une forme et une disposition quelconque. Elles peuvent notamment se présenter sous la forme de zones allongées s'étendant dans le sens transversal ou longitudinal sur un support magnétique de base, ces zones ayant la forme plus spécialement de batonnets ou de traits. Ces surépaisseurs sont soit réparties au hasard au cours de la fabrication, soit résultent d'une configuration recherchée de surépaisseurs formant un code particulier. De plus, ces surépaisseurs peuvent être toutes de même épaisseur, mais il est également possible de réaliser des surépaisseurs ayant des épaisseurs différentes les unes des autres, afin de créer également un code particulier sur les cartes sécuritaires de l'invention. Dans tous les cas, ces surépaisseurs auront une épaisseur au moins égale à 40 % de l'épaisseur de la couche magnétique continue. La limite supérieure de l'épaisseur des surépaisseurs n'est pas critique. Toutefois, en pratique, pour des raisons de commodité de lecture des pistes magnétiques et d'adhésion des couches magnétiques, il est préférable de limiter ces surépaisseurs à environ 200 % de l'épaisseur de la couche magnétique continue.

Les caractéristiques magnétiques de la couche continue et des surépaisseurs (ou couche discontinue ) du support d'enregistrement magnétique de l'invention, doivent être telles qu'elles procurent aux couches magnétiques des champs coercitifs moyens sensiblement égaux. Toutefois, les surépaisseurs peuvent être constituées de particules magnétisables de composition chimique ou physique différentes. Elles peuvent également avoir subi des orientations magnétiques différentes de celles de la couche continue, au moment de leurs fabrications respectives. De même, la quantité de particules magnétiques par unité de volume peut être différente dans les deux couches. C'est ainsi par exemple que la couche continue peut contenir des particules magnétisables de forme quelconque tandis que les surépaisseurs peuvent contenir des particules magnétiques aciculaires ou vice versa. De même, la couche magnétique continue peut comporter des particules magnétiques aciculaires orientées à la fabrication du support dans une direction déterminée, les surépaisseurs comportant des particules magnétiques aciculaires orientées dans une direction non confondue avec la direction précédente.

L'invention sera mieux comprise en se référant aux figures ci-jointes dans lesquelles :

- la figure I est une vue en plan et en coupe du support d'enregistrement magnétique de l'invention,

- la figure 2 montre un procédé et un dispositif destinés à préparer le support magnétique de l'invention et son transfert sur un objet à identifier,

- la figure 3 représente une variante de réalisation du support de l'invention.

En se référant à la figure I, le support d'enregistrement magnétique de l'invention représenté par (I) comprend un support de base (I bis) revêtu d'une couche continue d'épaisseur sensiblement constante d'un enduit magnétique transférable à chaud et/ou par pression, bien connu de l'homme de l'art. Sur la face supérieure de cette couche continue, sont positionnées solidairement des surépaisseurs (3) qui par simplification sont représentées sous la forme de zones rectangulaires s'étendant dans les sens transversal et longitudinal : toutefois, ces surépaisseurs peuvent présenter des formes différentes et des orientations autres que celles représentées. C'est ainsi que ces surépaisseurs peuvent constituer un graphique d'écriture de lettres ou de chiffres ou un graphique symbolique constituant un code de surépaisseur. De même, les surépaisseurs (3) peuvent être d'épaisseurs différentes, pourvu qu'elles satisfassent à la condition d'épaisseur minimale déjà indiquée. De plus, la couche magnétique discontinue constituant ces surépaisseurs doit posséder un champ coercitif moyen sensiblement égal à celui de la couche continue (2). Cette couche magnétique discontinue est une couche transférable à chaud et/ou par pression bien connue de l'homme de l'art.

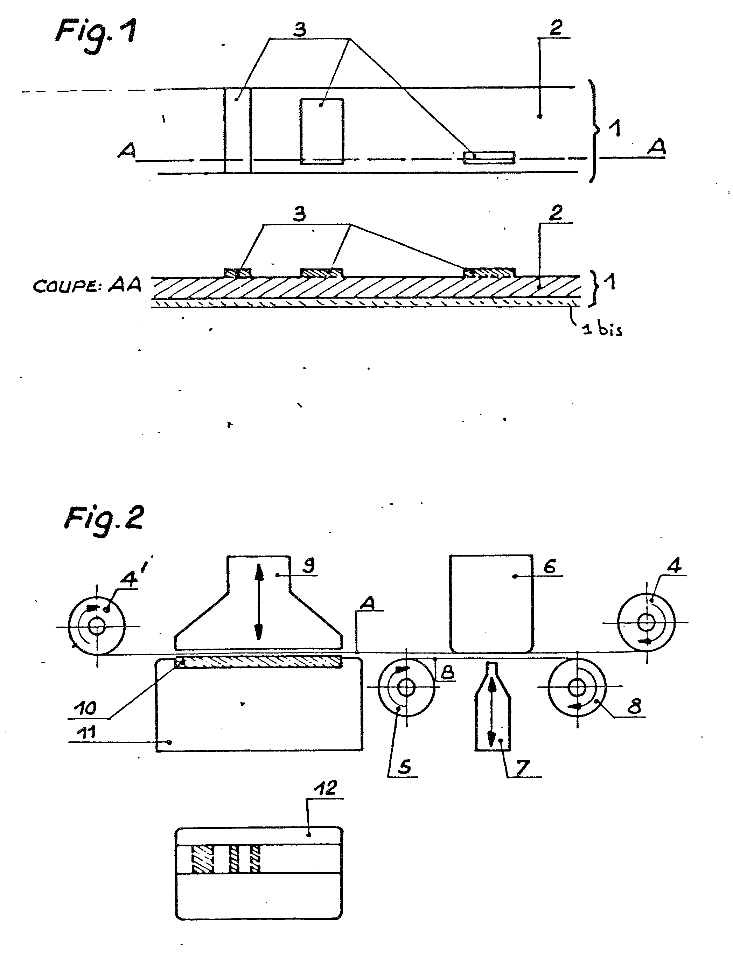

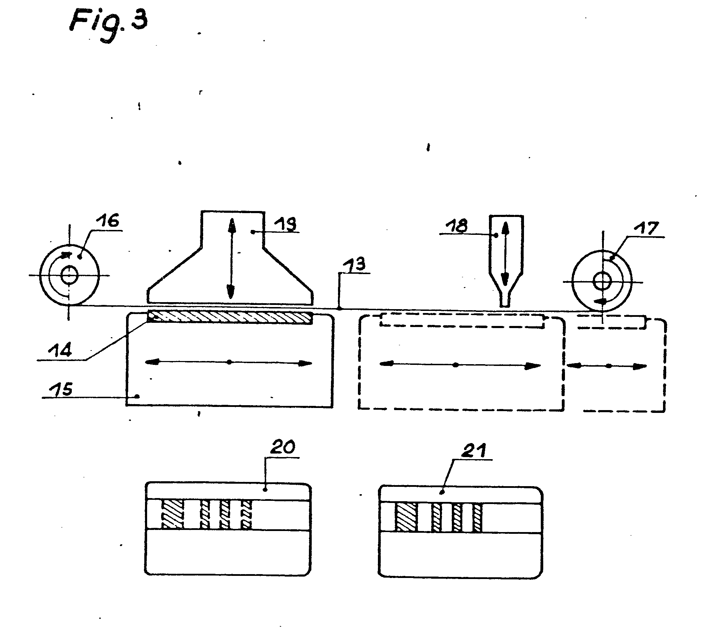

En se référant à la figure 2, on illustre schématiquement un premier procédé de fabrication du support magnétique de l'invention et son dispositif de mise en oeuvre. On dispose d'un "ruban transfert" (A) enroulé en forme de bobine (4) qui est connu dans la technique et qui est constitué d'une pellicule mécaniquement résistante telle que le polyester portant une couche magnétique connue dont l'épaisseur est sensiblement constante et qui correspond à la couche continue (2) de la figure I. On dispose par ailleurs, d'un deuxième ruban transfert (B) enroulé en forme de bobine (5), constitué comme le ruban transfert (A) selon un procédé connu et dont l'épaisseur et les caractéristiques magnétiques correspondent à celles des surépaisseurs (3) sur la figure I.

Les couches magnétiques constituant les rubans transfert (A) et (B) sont en général thermo-adhésives. Toutefois, le cas échéant, les rubans transfert (A) et (B) comportent en plus une couche en matériau thermo-adhésif. Les deux rubans transfert (A) et (B) se déplacent chacun dans le sens des flèches, l'un en face de l'autre, les supports magnétiques réciproques étant en regard, devant un dispositif de transfert comportant schématiquement une table (6) et un marteau (7) chauffé à une température pour laquelle la couche magnétique du ruban transfert (B) ou la couche thermo-adhésive positionnée sur le support magnétique du ruban transfert (B) ramollit et peut se transférer par contact sous pression du marteau sur le ruban transfert (A). La surface de l'outil à l'extrémité du marteau (7) correspond à la zone de surépaisseur que l'on veut appliquer sur le support magnétique de base du ruban transfert (A). Le marteau (7) est actionné à la fois dans le sens vertical afin de mettre en contact le ruban (A) et le ruban (B) sur la table (6) et dans le sens horizontal le long de la table (6) par des moyens mécaniques conventionnels non représentés qui peuvent être asservis pour obtenir une configuration donnée de surépaisseurs. De plus, le marteau peut être animé d'un mouvement de rotation dans le plan horizontal afin de pratiquer des transferts dans le sens longitudinal ou transversal sur le ruban transfert (A). Le ruban transfert (A) muni de ses surépaisseurs est ensuite lui-même transféré par pression sur le support I bis.

En pratique, les opérations se déroulent de la manière suivante. Au départ, on dispose au droit de la table (6) de deux rubans transfert (A) et (B) neufs venant se positionner par déroulement des bobines (4) et (5). Le marteau chauffé (7) est mis en mouvement verticalement et transfert sur le ruban transfert (A) des zones recherchées de surépaisseurs provenant du ruban transfert (B), et en se déplaçant à des positions successives et asservies devant la table 6) fournit une configuration de surépaisseurs de l'invention.L'opération de transfert étant terminée, l'élément usagé de ruban transfert (B) est déplacé par rotation sur la bobine (8) et un nouvel élément neuf venant de la bobine (5) vient se positionner au droit de la table (6) pour une opération ultérieure de transfert. L'élément de ruban transfert (A) ayant reçu les surépaisseurs de l'invention est ensuite amené par rotation des bobines (4) et (4') au droit de l'objet (IO), positionné sur un support (II), sur lequel l'élément magnétique du ruban transfert (A) est à appliquer. Un marteau chauffé (9) mobile verticalement et dont la tête correspond à l'élément à appliquer, vient plaquer le ruban transfert sur l'objet à traiter et sous l'effet combiné de la température et de la pression, la partie magnétique du ruban est transférée sur l'objet. Ce faisant, on réalise un support d'enregistrement magnétique sécuritaire selon l'invention.

Le procédé et le dispositif de base qui viennent d'être décrits comportent de nombreuses variantes en fonction de la configuration et des caractéristiques magnétiques des surépaisseurs du support magnétique de l'invention. Notamment l'outil de transfert sur la tête du marteau chauffé (7) peut présenter une configuration complète ou partielle de la configuration totale des surépaisseurs à transférer. De même, dans le cas où les surépaisseurs doivent être d'épaisseurs ou de caractéristiques magnétiques différentes, le dispositif comporte autant de dispositifs de transfert qu'il y a de types de surépaisseurs ou bien comporte autant de systèmes de bobines (5) (8) qui viennent se positionner successivement au droit de la table (6) qu'il y a de types de surépaisseurs à réaliser.

En se référant à la figure 3, on illustre schématiquement un deuxième procédé de fabrication du support magnétique selon l'invention. On dispose d'un ruban transfert (13) du même type que ceux décrits sur la figure 2 et qui est enroulé sur une bobine (17). L'objet (14) est mobile dans le sens horizontal sur un porte objet (15). Dans une première opération, on élabore sur l'objet (14) les surépaisseurs en venant placer le porte objet (15) devant un poste de transfert comportant un marteau chauffé (18) identique au marteau (7) de la figure 2. Par déplacement du porte objet (15) devant le marteau fixe (18), on transfère sur l'objet les surépaisseurs à partir d'un élément neuf de ruban transfert (13) selon une configuration préétablie pour obtenir l'objet (21) comportant des surépaisseurs. Ensuite, on déplace le porte objet (15) au droit d'un marteau chauffé (19) identique au marteau (9) de la figure 2. On déplace le ruban transfert (13) de sorte que l'élément de ruban transfert placé sous le marteau (19) soit revêtu d'une couche magnétique continue. Par déplacement vertical du marteau (19) on vient plaquer le ruban transfert (13) à l'endroit de l'objet (14) comportant les surépaisseurs du support magnétique ; sous l'effet de la pression et de la température, la partie magnétique du ruban est transférée sur l'objet à identifier. De la sorte, on constitue un objet (20) selon un mode préférentiel de l'invention comportant une couche magnétique discontinue et une couche magnétique continue, les deux couches étant obtenues à partir du même ruban transfert.

Bien entendu, le procédé et le dispositif précédents peuvent comporter de nombreuses variantes. Notamment dans le cas où la couche magnétique continue est différente en épaisseur et en caractéristiques magnétiques de celles des surépaisseurs, tout en ayant un champ coercitif sensiblement égal. Le procédé comporte un premier poste de transfert des surépaisseurs au moyen d'un premier ruban transfert puis un second poste de transfert du support magnétique de base, indépendant du premier poste et comportant un ruban transfert différent du ruban transfert (13).

Bien entendu, des dispositifs différents peuvent remplacer les marteaux décrits ci-dessus. On peut utiliser par exemple, des cylindres chauffants muni d'empreintes en relief correspondant aux zones des surépaisseurs désirées.

Ces opérations peuvent être simultanées, séquentielles ou être effectuées sur des appareils différents. La commnade du déplacement du marteau (18) ou de la table (15) peut être effectuée au moyen d'appareils manuels, automatiques ou utilisant des dispositifs de commande électroniques perfectionnés.

Afin de protéger les pistes magnétiques des dégradations, il est possible de recouvrir le support magnétique sécuritaire de l'invention d'une pellicule protectrice ; ensuite on égalise la surface par des procédés connus tels que le calandrage.

Dans la description précédente, on a montré un support magnétique de l'invention dans lequel les surépaisseurs étaient positionnées entre le support et la couche magnétique continue. Il est bien entendu qu'une présentation inverse rentre dans le cadre de la présente invention, dans laquelle la couche magnétique continue est fixée sur le support, les surépaisseurs étant à l'extérieur.

La fabrication d'un objet, selon cette variante, comporte le transfert des surépaisseurs à partir d'un ruban transfert au moyen d'un marteau chauffé sur la couche magnétique continue déjà positionnée sur le support, suivi le cas échéant d'une opération de finition comme par exemple le calandrage.

Il est bien entendu également, que dans la couche de la présente invention, le support peut être temporaire comme dans le cas d'une bande transfert, ou définitif, lorsqu' il s'agit d'un objet sur lequel on a transféré les deux couches continues et discontinues.

Selon un autre procédé de préparation du support magnétique selon l'invention, les surépaisseurs sont créées par enlèvement de matière magnétique à partir d'un ruban transfert d'épaisseur correspondant à l'épaisseur maximale du support magnétique recherché, au moyen d'un procédé connu tel que l'abrasion localisée. Le support magnétique résultant est ensuite positionné sur l'objet à identifier comme précédemment.

Afin d'illustrer les avantages procurés par les supports d'enregistrement magnétique de la présente invention, on décrit ci-après une application spécifique relative à une carte de crédit, cette application étant fournie à titre illustratif et non limitatif.

Selon cette application, on prévoit une carte de crédit revêtue d'une couche magnétique continue et d'une couche magnétique discontinue selon l'invention. La carte est délivrée à son titulaire libre de toute information magnétique. Pour authentifier la carte lors d'une opération de débit du compte, celle-ci est introduite dans un appareil de lecture comportant facultativement une tête d'effacement magnétique, et ensuite successivement dans l'ordre, une tête d'enregistrement, une tête de lecture puis une tête d'effacement. Le support magnétique en passant devant la tête d'enregistrement est soumis à champ magnétique unidirectionnel variable dont la valeur est comprise entre la valeur de saturation de la couche continue et la valeur de saturation des zones comportant les surépaisseurs.

Ensuite, sur la tête de lecture, on recueille un signal qui sur les zones du support magnétique de base sera d'une

moindre amplitude que celle du signal lu sur les zones comportant les surépaisseurs. Par conséquent, un support d'enregistrement magnétique d'épaisseur uniforme, quel que soit son épaisseur, ne fournira pas un signal de lecture identique au signal de lecture fourni par le support magnétique de l'invention. Il est donc possible par des moyens magnétiques de discriminer une carte authentique d'une carte falsifiée. Ensuite, une carte authentique ayant été reconnue et acceptée, elle passe devant une tête d'effacement connue devant laquelle le signal enregistré est effacé, de telle façon qu'en dehors de l'appareil de contrôle il est impossible de reconstituer la configuration magnétique du support magnétique de l'invention.

I3

REVENDICATIONS

I - Support d'enregistrement magnétique sécuritaire comprenant un support (I bis) revêtu d'une première couche magnétique continue (2) d'épaisseur sensiblement constante et d'une seconde couche magnétique discontinue formant localement des surépaisseurs(3) ou vice-versa, caractérisé en ce que les deux couches magnétiques possèdent un champ coercitif moyen sensiblement égal tandis que la ou les épaisseurs des surépaisseurs (3) est supérieure ou égale à 40 % de l'épaisseur moyenne de la première couche magnétique continue (2).

2 - Support d'enregistrement magnétique selon la revendication I, caractérisé en ce que les surépaisseurs (3) présentent des épaisseurs égales.

3 - Support d'enregistrement magnétique selon la revendication I ou 2, caractérisé en ce que les particules magnétiques des deux couches sont de natures physiques identiques.

4 - Support d'enregistrement magnétique selon l'une des revendications I à 3, caractérisé en ce que les particules magnétiques sont de natures chimiques identiques.

5 - Support d'enregistrement magnétique selon l'une des revendications I ou 2, caractérisé en ce que les particules magnétiques des deux couches sont des particules aciculaires de $\gamma$ - $Fe_2O_3$ orientées dans des directions non confondues.

6 - Procédé de réalisation d'un support magnétique selon l'une des revendications I à 5, caractérisé en ce que l'on réalise le transfert à chaud et sous pression de la couche magnétique discontinue (3) sur la couche magnétique continue (2).

0033041

PI. I/2

Fig.1

COUPE: AA

Fig.2

**Fig.3**

0033041

Numéro de la demande

EP 80 40 0119.6

Office européen
des brevets

**RAPPORT DE RECHERCHE EUROPEENNE**

| Catégorie | Citation du document avec indication, en cas de besoin, des parties pertinentes | Revendication concernée |
|---|---|---|
| E,X | GB - A - 2 026 946 (PYRAL)<br>* revendications 1, 5, 10 et 15; fig. 1 * | 1,2,5, 6 |
| E | & DE - A1 - 2 931 043<br>-- | |
| | DE - B - 1 282 804 (TELEFUNKEN)<br>* revendications 1 et 3; fig. 1 *<br>-- | 1,2,4 |
| D | FR - A1 - 2 406 654 (STE PYRAL)<br>* page 1, lignes 25 à 29 *<br>-- | 6 |
| A | GB - A - 1 546 806 (EMI LIMITED)<br>* page 2, ligne 125 à page 3, ligne 2; fig. 1c *<br>---- | |

## DOCUMENTS CONSIDERES COMME PERTINENTS

**CLASSEMENT DE LA DEMANDE (Int. Cl.)**

G 11 B 5/84
G 11 B 5/70
G 06 K 19/08

**DOMAINES TECHNIQUES RECHERCHES (Int. Cl.)**

G 06 K 19/08
G 11 B 5/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| Berlin | 02-09-1980 | LEITHÄUSER |

OEB Form 1503.1   06.78